(19) Europäisches Patentamt
European Patent Office
Office européen des brevets

(11) EP 4 650 728 A1

(12) EUROPEAN PATENT APPLICATION

(43) Date of publication:
19.11.2025 Bulletin 2025/47

(51) International Patent Classification (IPC):
G01H 1/00 (2006.01)   G01M 7/02 (2006.01)
G01M 13/045 (2019.01)

(21) Application number: 25174915.6

(22) Date of filing: 07.05.2025

(52) Cooperative Patent Classification (CPC):
G01H 1/00; G01M 7/025; G01M 13/045

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 14.05.2024 GB 202406822

(71) Applicant: Terex GB Limited
Dungannon
County Tyrone BT71 4DR (GB)

(72) Inventor: MURPHY, Glenn
Craigavon, BT65 5BH (GB)

(74) Representative: FRKelly
Waterways House
Grand Canal Quay
Dublin D02 PD39 (IE)

(54) VIBRATION MONITORING AND VISUALISATION SYSTEM

(57) A vibration monitoring system comprises sensor units that include a vibration sensor and which are locatable on an apparatus to be monitored at a respective different location. Each sensor unit is operable to take vibration measurements using its vibration sensor. The system obtains synchronized vibration measurement data for each sensor unit, and calculates a difference between the respective vibration measurement data for each sensor unit and nominal vibration data to obtain respective non-nominal vibration data for each sensor unit. The system renders to a user a visualisation, such as an animation, of the non-nominal vibration data for each sensor unit, which facilitates identification of undesirable operating modes or other undesirable conditions of the apparatus.

FIG. 1

**Description**

FIELD OF THE INVENTION

This invention relates to monitoring systems for vibrating apparatus, especially but not exclusively vibratory screening apparatus.

BACKGROUND TO THE INVENTION

It is desirable to monitor the vibrations of a vibrating apparatus such as a vibratory screening apparatus in order to monitor the operational performance of the apparatus and/or the structural condition of the apparatus. To this end it is known to provide monitoring systems that comprise vibration sensors for mounting on the apparatus.

Typical vibration monitoring systems for screening apparatus focus on analysing the screen's behaviour via individual location tests, in isolation, to understand vibration patterns and effects. The monitoring and analysis is normally performed with the goal of minimising vibration in rotating machinery or determining the condition of components, e.g. bearings, in such a system. The analysis that can be performed using data gathered by such monitoring systems is limited. For example, vibration monitoring systems that measure vibrations at different times in different locations do not allow analysis of phase-related aspects of the screen's vibration.

Furthermore, conventional vibration monitoring systems do not allow undesirable operating modes or other undesirable conditions to be readily identified.

It would be desirable to provide an improved vibration monitoring system that mitigates the problems outlined above.

SUMMARY OF THE INVENTION

From a first aspect the invention provides a vibration monitoring system comprising a plurality of sensor units, each sensor unit comprising at least one vibration sensor and being locatable on an apparatus to be monitored at a respective different location, wherein each sensor unit is operable to take vibration measurements using the respective at least one vibration sensor, the system being configured to obtain synchronized vibration measurement data for each sensor unit, and being configured to calculate a difference between the respective vibration measurement data for each sensor unit and nominal vibration data to obtain respective non-nominal vibration data for each sensor unit, and wherein the system is configured to render to a user at least one visualisation of the respective non-nominal vibration data for each sensor unit.

In preferred embodiments, the system is configured such that the respective vibration measurement data for each sensor unit comprises vibration measurement data in respect of two or three mutually perpendicular axes of a common coordinate system, and wherein the nominal vibration data comprises respective nominal vibration data for each of said two or three mutually perpendicular axes of the common coordinate system, and wherein said system is configured to obtain, for each sensor unit, respective non-nominal vibration data for each of said two or three mutually perpendicular axes of the common coordinate system by calculating a difference between the respective vibration measurement data for each of said two or three mutually perpendicular axes of the common coordinate system and the respective nominal vibration data for said two or three mutually perpendicular axes of the common coordinate system. Preferably, each sensor unit is configured to measure vibrations along two or three mutually perpendicular sensing axes, and wherein, preferably, each sensing axis is aligned with a respective one of the axes of the common coordinate system, or wherein the system is configured to transform vibration measurements taken in respect of each sensing axis to corresponding vibration measurement data in respective of a respective one of the axes of the common coordinate system.

Preferably, calculating said difference involves subtracting the nominal vibration data from the respective vibration measurement data. Preferably, the nominal vibration data comprises nominal amplitude data indicating the amplitude of nominal vibratory movement, and the vibration measurement data comprises measured amplitude data indicating the amplitude of measured vibratory movement, and wherein calculating said difference involves subtracting the nominal amplitude data from the measured amplitude data, preferably in respect of corresponding times and/or in respective of corresponding frequencies.

Preferably, said nominal vibration data comprises an average of the vibration measurement data for each sensor unit. In preferred embodiments, the respective nominal vibration data for each of said two or three mutually perpendicular axes of the common coordinate system is an average of the respective vibration measurement data for each of said two or three mutually perpendicular axes of the common coordinate system.

Preferably, the respective vibration measurement data for each sensor unit is indicative of respective vibration measurements taken over time, the respective vibration measurement data for the sensor units being synchronised with each other, conveniently by synchronisation of the respective vibration measurements taken over time.

Preferably, the respective non-nominal vibration data is indicative of non-nominal vibrations detected by the respective sensor unit over time, the respective non-nominal vibration measurement data for the sensor units being synchronised with each other.

Preferably, the respective non-nominal vibration data is indicative of the amplitude, frequency and phase of non-nominal vibrations detected by the respective sensor unit.

Preferably, said at least one visualisation comprises a visual representation of the respective non-nominal vibration data for each sensor unit without visually representing other vibrations represented by said vibration measurement data, and/or wherein said at least one visualisation comprises a visual representation of non-nominal vibrations corresponding to the respective non-nominal vibration data for each sensor unit, and preferably does not include a visual representation of other vibrations represented by said vibration measurement data.

In preferred embodiments, said at least one visualisation comprises at least one graphical representation, or tabular representation of the respective non-nominal vibration data for each sensor unit, for example comprising any one or more of: a table; an amplitude over time plot; an orbit plot; a planar plot with respect to first and second vibration axes, and/or wherein said at least one visualisation comprises at least one animation illustrating non-nominal vibration corresponding to the non-nominal vibration data.

Optionally, said at least one visualisation includes at least one vibration target or vibration threshold and/or is configured to highlight one or more part of said at least one visualisation that corresponds to undesirable vibrations.

In some embodiments, the system is configured such that upon determining that said non-nominal vibration data corresponds to an undesirable condition and/or undesirable operating mode, or otherwise corresponds to undesirable vibrations, the system is configured to generate an alarm, for example an audio and/or visual alarm, and/or to highlight one or more part of said at least one visualisation that corresponds to the detected undesirable condition, undesirable operating mode, or other undesirable vibrations, and wherein the system may be configured to determine if said non-nominal vibration data corresponds to an undesirable condition, undesirable operating mode, or undesirable vibrations by, for example comparing the non-nominal vibration data with one or more vibration threshold and/or by comparing respective non-nominal vibration data for different sensor units with each other.

In preferred embodiments, the system being configured to cause each sensor unit to take respective vibration measurements simultaneously to obtain synchronized vibration measurement data for each sensor unit, and wherein the sensor units are preferably configured to synchronize with each other before taking the respective measurement, and/or wherein, preferably, each sensor unit is configured to take the respective measurement within a sampling window, the sampling window being the same for each sensor unit and/or at the same sampling frequency.

In preferred embodiments, the sensor units are configured to synchronize with each other by synchronizing with an external reference time source, and wherein each sensor unit preferably includes means for communicating with the external reference time source, e.g. a GPS receiver, and wherein each sensor unit typically has an internal clock, and is configured to synchronize with the, or each, other sensor unit by synchronizing the internal clock with the external time reference source.

In typical embodiments, the system includes a controller, the controller being configured for communication, preferably wireless communication, with at least one of, and preferably all of, the sensor units, and wherein the controller is preferably separate from the sensor units, for example comprising a separate computing device, preferably a separate portable computing device, for example a smartphone, a tablet computer or a laptop computer, and wherein, preferably, the controller is configured for wireless communication with at least one of, and preferably all of, the sensor units via a direct wireless communication link, and may be configured to support any suitable wireless protocol(s), for example via WiFi (or other wireless LAN communication), Bluetooth (or other personal area network (PAN) wireless communication), Zigbee (or other wireless sensor network communication).

In preferred embodiments, each sensor unit is configured for wireless communication with at least one other sensor unit (and optionally each other sensor unit), preferably via a direct wireless communication link, and may be configured to support any suitable wireless protocol(s), for example via WiFi (or other wireless LAN communication), Bluetooth (or other personal area network (PAN) wireless communication), Zigbee (or other wireless sensor network communication).

Optionally, the system is configured to use the respective measurements from at least one of, preferably at least two of, and optionally all of, the sensor units to analyse the operation and/or condition of the apparatus being monitored, for example to determine if the apparatus is operating at or near to a designated critical frequency, and/or to identify an operational mode of the apparatus and/or an undesirable condition of the apparatus.

In preferred embodiments, the system is configured to use the respective simultaneously taken measurements from two or more of the sensor units to determine one or more phase relationship between movement of the apparatus at the respective sensor unit locations.

From another aspect the invention provides an apparatus, for example a screening apparatus or other vibratory apparatus, to be monitored by the vibration monitoring system of the first aspect of the invention, the vibration monitoring system being installed on an apparatus to be monitored, wherein each sensor unit is removably mounted on the apparatus at a respective different location.

Typically, the apparatus includes or is coupled to a drive system for imparting desired vibratory movement to the apparatus, and wherein said at least one visualisation comprises a visual representation of the respective non-nominal vibration data for each sensor unit without visually representing said desired vibratory movement, and/or wherein said at least one visualisation comprises a visual representation of non-nominal vibrations corresponding to the respective non-nominal vibration data for each sensor unit, and does not include a visual representation of said desired vibratory movement.

In preferred embodiments, said at least one visualisation comprises at least one animation illustrating non-nominal vibration of said apparatus corresponding to said non-nominal vibration data, and preferably not illustrating desired vibratory movement imparted to the apparatus by a drive system.

Optionally, said at least one visualisation comprises at least one animation comprising a representation of the apparatus animated to move in a manner corresponding to the non-nominal vibration data, for example by causing a respective location of the representation corresponding to a respective sensor unit location to move in accordance with the respective non-nominal vibration data for the respective sensor unit.

In typical embodiments, the system further includes at least one visual display device for rendering said at least one visualisation to the user.

From another aspect, the invention provides a monitoring method using a vibration monitoring system comprising a plurality of sensor units, each sensor unit comprising at least one vibration sensor and being operable to take measurements using the respective at least one vibration sensor, the method comprising: locating each sensor unit at a respective different location on an apparatus to be monitored; obtaining synchronized vibration measurement data for each sensor unit; calculating a difference between the respective vibration measurement data for each sensor unit and nominal vibration data to obtain respective non-nominal vibration data for each sensor unit; and rendering to a user at least one visualisation of the respective non-nominal vibration data for each sensor unit.

In preferred embodiments, the system monitors vibrations at multiple locations of a vibratory apparatus (e.g. a vibratory screening apparatus) simultaneously. This allows phase-related aspects of the apparatus' movement to be determined, which is beneficial since, for example, for a vibratory screening apparatus to operate optimally, it is desirable that vibrations at different locations are in phase, or at least have a desired phase relationship. Advantageously, the measurements at the multiple locations are synchronised precisely to allow identification of high frequency signs or other indications of hazardous or damaging vibrating screen performance. Advantageously, the system presents one or more visualisation of variations in vibrations between the multiple locations to allow undesirable operating modes to be readily identified.

Accordingly, in preferred embodiments the vibration monitoring system comprises a plurality of sensor units, each sensor unit comprising at least one vibration sensor and being locatable on an apparatus to be monitored at a respective different location, wherein each sensor unit is operable to take measurements using the respective at least one vibration sensor, the system being configured to cause each sensor unit to take a respective measurement simultaneously, and wherein the sensor units are configured to synchronize with each other before taking the respective measurement.

In preferred embodiments, the system is configured to use the respective measurements from at least one of, preferably at least two of, and optionally all of, the sensor units to analyse the operation and/or condition of the apparatus being monitored, for example to determine if the apparatus is operating at or near to a designated critical frequency, and/or to identify an operational mode of the apparatus and/or to identify undesirable structural conditions in the apparatus.

Advantageously, the system is configured to provide one or more indication, preferably at least one visual indication, of the respective vibrations detected by at least two sensor units, in particular to provide a visualization of unbalanced vibrations between two or more sensor units, wherein unbalanced vibrations are variations in vibration with respect to an average baseline level of the two or more sensor units. The system may be configured to provide at least one alarm, preferably at least one audio and/or visual alarm, indicating that the apparatus being monitored is determined to be in, or close to being in, an undesirable operating state, e.g. operating in an undesirable operating mode or operating at or near to a designated critical frequency.

In preferred embodiments, the sensor units are configured to synchronize with each other by synchronizing with an external reference time source, and wherein each sensor unit preferably includes means for communicating with the external reference time source, e.g. a GPS receiver or other precision network that provides a reference time source. Typically, each sensor unit has an internal clock, and is configured to synchronize with the, or each, other sensor unit by synchronizing the internal clock with the external time reference source.

Advantageously, the system is configured to use respective simultaneously taken measurements from two or more of the sensor units to determine the relationship between one or more characteristic of the movement, in particular the vibratory movement, of the apparatus at the respective sensor unit locations, wherein the characteristic(s) may include any one or more of phase, magnitude, direction and frequency.

From another aspect, the invention provides the system of the first aspect installed on an apparatus to be monitored, wherein each sensor unit is removably mounted on the apparatus at a respective different location. In alternative embodiments, the sensor units may be permanently fixed to, or incorporated into, the apparatus to be monitored. The apparatus may be a screening apparatus or other vibratory apparatus.

From another aspect the invention provides a monitoring method using a vibration monitoring system comprising a plurality of sensor units, each sensor unit comprising at least one vibration sensor and being operable to take measurements using the respective at least one vibration sensor, the method comprising: locating each sensor unit at a respective different location on an apparatus to be monitored; causing each sensor unit to take a respective measurement simultaneously; and causing the sensor units to synchronize with each other before taking the respective measurement. Causing the sensor units to synchronize with each other preferably involves causing the sensor units to synchronise with an external reference time source.

The invention is not limited to use with screening apparatus and may alternatively be used with other apparatus that vibrate in use, and which may generally be referred to as vibrating apparatus or vibratory apparatus. Examples of other vibrating apparatus with which embodiments of the invention may be used include feeding apparatus, walkways, conveyors, hoppers, crushers, underpans for crushers and other material processing apparatus and accessories.

Further advantageous aspects of the invention will be apparent to those ordinarily skilled in the art upon review of the following description of specific embodiments and with reference to the accompanying description.

BRIEF DESCRIPTION OF THE DRAWINGS

An embodiment of the invention are now described by way of example and with reference to the accompanying drawings in which:

Figure 1 is a perspective view of a vibratory screening apparatus suitable for use with embodiments of the invention, including sensor units that are part of a vibration monitoring system embodying one aspect of the invention;

Figure 2 is an illustration of the screening apparatus of Figure 1 experiencing torsional twisting forces during use;

Figure 3 is an illustration of the screening apparatus of Figure 1 experiencing fishtailing forces during use;

Figure 4 is an illustration of the screening apparatus of Figure 1 experiencing vertically and laterally offset forces during use;

Figure 5 is a schematic diagram of an embodiment of the vibration monitoring system including a plurality of the sensor units;

Figure 6 shows graphical illustrations of respective exemplary outputs of four sensor units;

Figure 7 shows, for the X and Y sensing axes of one sensor unit, graphical illustrations of a respective exemplary raw vibration output signal, an average baseline vibration output signal and a respective unbalance output signal being the difference between the raw vibration output signal and the average baseline vibration output signal;

Figure 8 shows a table providing exemplary vibration data, including a visualization of unbalanced vibrations between two or more sensor units; and

Figures 9A and 9B show, for the X and Y sensing axes of four sensor units, graphical representations of the respective unbalanced output of the sensor units.

DETAILED DESCRIPTION OF THE DRAWINGS

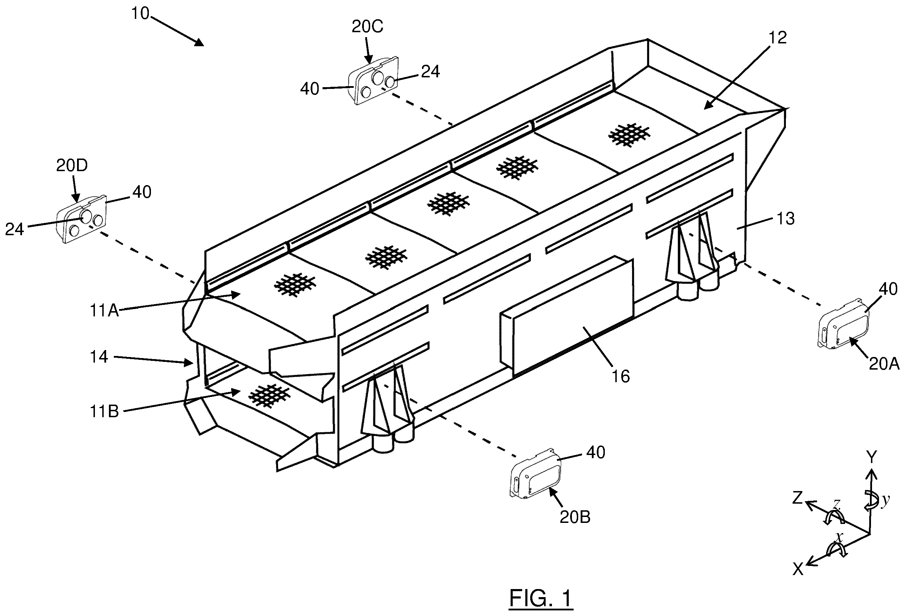

Referring now to Figures 1 to 4 of the drawings there is shown, generally indicated as 10, a screening apparatus suitable for use with embodiments of the present invention. The screening apparatus 10 may be of any conventional type or configuration, i.e. the invention is not limited to use with the particular type or configuration of the illustrated screening apparatus.

Typically, the screening apparatus 10 comprises one or more screening deck 11A, 11B, each deck 11A, 11B comprising screening media (e.g. screening mesh or screening bars) for screening material such as aggregate material (not shown). Screening typically involves separation of particulate material according to particle size. Screening apparatus such as the apparatus of Figure 1 are commonly referred to as screen boxes. The screening apparatus 10 has an inlet 12 at one end and an outlet 14 at the other end. In use, material to be screened is deposited onto the top screening deck 11A via the inlet 12 whereupon relatively small particles pass through the top screening deck 11A onto the lower screening deck 11B while larger particles remain on the top deck 11A. The particles that remain on the top deck 11A travel along the top deck 11A and exit the apparatus 10 via the outlet 14, may be deposited onto a conveyor (not shown) or a chute (not shown) or otherwise collected by any suitable means. Of the particles that fall onto the lower deck 11B, relatively small particles pass through the lower deck 11B while larger particles remain on the top deck 11A. The particles that remain on the lower deck 11B travel along the lower deck 11B and exit the apparatus 10 via the outlet 14, may be deposited onto a conveyor (not shown) or a chute (not shown) or otherwise collected by any suitable means. The particles that pass through the lower deck 11B may be deposited onto a conveyor (not shown) or a chute (not shown) or otherwise collected by any suitable means.

In order to facilitate screening, the apparatus 10 includes a drive system 16 (only its cover is visible) for causing the screening apparatus 10 to vibrate. When vibrating, the screening apparatus 10 (or other vibratory apparatus as applicable) moves in a reciprocating or oscillatory manner, which may be linear or orbital (e.g. circular or elliptical), and the drive system 16 may be configured to impart such movements to the apparatus 10. Typically, the drive system 16 causes the screening apparatus 10 to vibrate with respect to a base (not shown), usually comprising a frame and/or a chassis. The screening apparatus 10 may be mounted on or coupled to the base in any suitable manner that supports the vibratory movement, e.g. by one or more springs (not shown). The drive system 16 may take any conventional form, typically comprising one or more motor (not shown) configured to drive, or rotate, one or more eccentric mass(es) or out-of-balance wheel(s). The drive system 16 may be referred to as a vibratory drive system. The screening apparatus 10 may be referred to as a vibratory screening apparatus. The drive system 16 may be adjustable to adjust one or more characteristics of the vibrations of the screening apparatus 10. In use, the vibration of the screening apparatus 10 facilitates the separation of material by the screening decks 11A, 11B and the travelling of material along the screening decks 11A, 11B.

Typically, the drive system 16 is located at or near the centre of gravity of the screening apparatus 10. This arrangement tends to generate vibrations of uniform amplitude and acceleration throughout the screening apparatus. In the illustrated embodiment, the drive system 16 is located between the inlet 12 and outlet 14, preferably midway or substantially midway between the inlet 12 and outlet 14. Other locations of the drive system 16 may alternatively be adopted to suit different types of screening apparatus and applications. One option is to offset the drive system to impart vibrations with higher amplitude and acceleration to the feed end 12 of the screening apparatus 10 where material load is at a maximum. Other approaches include locating the drive above/below the screening apparatus, or providing multiple drives at different locations on the screening apparatus, and/or using crank driven leaf spring(s) or resonance drives to effect the desired motion profile.

It will be understood that the invention is not limited to use with screening apparatus and may alternatively be used with other apparatus that vibrate in use, and which may generally be referred to as vibrating apparatus or vibratory apparatus. Such apparatus may vibrate because they include or are coupled to a vibratory drive system (such as the drive system 16), and/or because they are coupled to another vibrating or vibratory apparatus (such as the screening apparatus 10) that vibrates in use and so imparts vibrations to the apparatus being monitored. Examples of other vibrating apparatus with which embodiments of the invention may be used include feeding apparatus, walkways, conveyors, hoppers, crushers, underpans for crushers and other material processing apparatus and accessories.

During use, the vibratory movement of the screening apparatus 10 (or other vibratory apparatus) has characteristics, in particular amplitude, acceleration, velocity and direction(s), any one or more of which it may be desired to monitor. The or, each vibration characteristic is preferably measured with respect to one or more reference axis that conveniently, but not necessarily correspond to one or more axis of the apparatus itself, e.g. longitudinal, transverse and/or vertical axis of the apparatus 10. In preferred embodiments, the, or each vibration characteristic is measured with respect to two or three Cartesian reference axes (X, Y, Z), each preferably being aligned with an axis of the apparatus 10. For example, Figure 1 shows Cartesian reference axes (X, Y, Z) wherein the X axis is aligned with the longitudinal axis of the apparatus 10, the Y axis is aligned with the vertical axis of the apparatus 10 and the Z axis is aligned with the transverse axis of the apparatus 10. In Figure 1 z denotes vibrations in the X-Y plane, y denotes vibrations in the X-Z plane and x denotes vibrations in the Y-Z plane). In some embodiments, vibrations of interest may be measured in one or both of only two axes corresponding to the longitudinal and vertical axes of the apparatus 10 (the X and Y axes in the illustrated example). The, or each, direction of the vibrations are sometimes referred to as the screen angle, in particular the dynamic screen angle. The vibrations may be linear, e.g. rectilinear or reciprocating, in which case the vibrations may be along a single axis, or may be circular or elliptical in which case the vibrations may be along multiple axes. It may also be desired to measure the static screen angle, i.e. the angle of apparatus with respect to one or more reference axis when the apparatus is not vibrating.

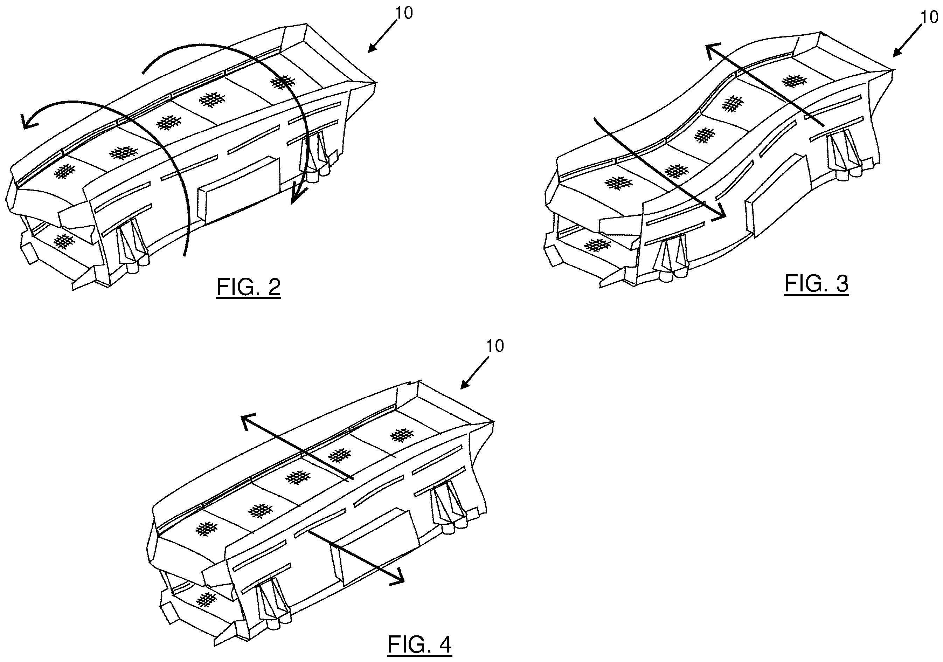

In Figure 1 the screening apparatus 10 is represented in a manner that corresponds to a rest state or a state in which the apparatus 10 is operating under optimal conditions in which the vibrations of the apparatus 10 are in phase. Figure 2 illustrates the screening apparatus 10 during use in an exemplary (undesirable) operating mode in which the vibrational movement of the apparatus 10 coincides with a critical frequency (e.g. a resonant frequency of the apparatus 10) causing a torsional twist along its length. Such twisting forces tend to create motion that is destructive for the apparatus 10 and which increases dynamic stress levels in the structure of the apparatus 10, as well as significantly reducing overall fatigue life of critical connections in the apparatus 10. By way of example, for a typical screening apparatus the mode illustrated in Figure 2 commonly occurs at operating frequencies in the range of 10 - 20Hz, although the frequency range in which undesirable vibrations may occur can vary widely depending on the geometry and structure of the apparatus 10. The mode illustrated in Figure 2 occurs when the screen operating frequency, or a harmonic of same, coincide with inherent structural-related frequencies of the apparatus 10. These critical frequencies are difficult to predict as they are dependent on many variables that are unique to each screen design and assembly, e.g. mass of the screen, mass of the screen media, mass of screened material (which varies during use), stiffness of screen structures and stiffness of bolted and welded connections, and which may vary during the lifetime of the apparatus 10. The mode illustrated in Figure 2 is just one example of many undesirable frequency-dependent operating modes that can arise during use of the apparatus 10. Figures 3 and 4 illustrate two further common examples. In Figure 3, the apparatus 10 is experiencing longitudinal fishtail movement from the feed end to the discharge end. Commonly, the mode of Figure 3 occurs in the operating frequency range 15 - 25Hz, and tends to be less destructive than the torsional twist mode of Figure 2. In Figure 4 the apparatus 10 is experiencing vertical flag movement from top to bottom. Commonly, the mode of Figure 4 occurs in the operating frequency range 20 - 30Hz, also tends to be less destructive than the torsional twist mode. To identify these, and other, undesirable operating modes, it is necessary to make simultaneous vibration measurements from multiple locations on the screening apparatus 10, in particular in order to determine phase information in relation to one or more characteristics of the vibratory movement. Moreover, in order to accurately identify operational modes of interest, the simultaneous measurements are precisely time-synchronized. For example, assuming that the frequency range in which modes of interest commonly occur has a maximum frequency of 30Hz, then the minimum sampling rate required to obtain the measurement data is 76.8Hz (30Hz x 2.56 according to the Nyquist theorem), which equates to a period between samples of no more than 13ms. The, or each, corresponding measurement in each location are made within the same sampling window (more than one measurement may be taken in each location within each sampling window to improve accuracy). Accordingly, the synchronous measurement timing accuracy is a fraction of, or at least less than, the vibration cycle time period to allow phase relationships between vibration cycles of equal frequency at different locations/sensors to be discerned, and as can be seen from the above example may be in the order of milliseconds. In preferred embodiments each sensor unit is configured to take measurements in the same sampling window and/or at the same sampling frequency.

As well as identifying undesirable operational modes (as illustrated by way of example in Figures 2 to 4) vibration monitoring enables other conditions, especially undesirable conditions, of the apparatus 10 to be identified including structural and/or operation conditions, for example any one or more of: assembly defects; quality defects in one or more part of the apparatus; fitting defects relating to one or more part of the apparatus; unbalanced, or out-of-time, movement of rotational part(s) (e.g. drive parts), unbalanced or twisted parts of the apparatus (e.g. the screen structure); uneven loading of one or more part of the apparatus (e.g. the screen); blockage or contamination of one or more parts of the machine (e.g. material stuck in the screen or a chute); failure of one or more part of the apparatus (e.g. spring failure).

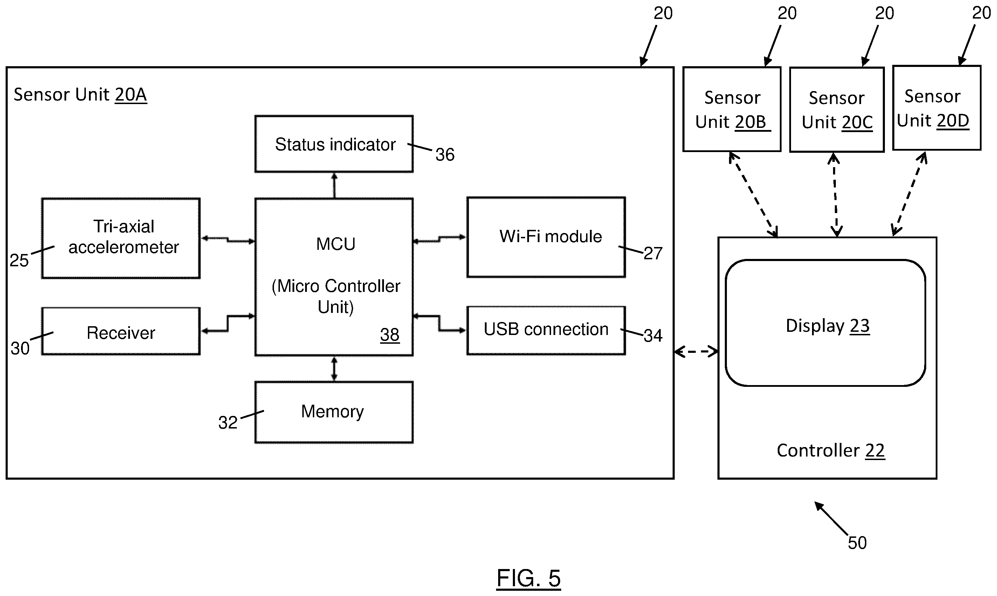

The vibratory movement of the screening apparatus 10 (or of any other vibrating apparatus) may be monitored by a monitoring system 50 embodying one aspect of the present invention. With reference in particular to Figure 5, the monitoring system 50, which in preferred embodiments may be referred to as a vibration monitoring system, comprises a plurality of sensor units 20 for mounting on the screening apparatus 10. The sensor units 20 are separate from each other so that they can be located at respective different locations on the apparatus to be monitored. The sensor units 20 are preferably removably mountable on the apparatus 10. Any conventional removable attachment means may be used for this purpose, but in preferred embodiments each sensor unit 20 is provided with one or more magnet 24 for removably mounting the sensor unit 20 on the apparatus 10 (which is typically at least partly formed from steel or other magnetic-compatible metal). In use, each sensor unit 20 is mounted on the screening apparatus 10 (or any other vibrating apparatus as applicable) at a respective desired location, and preferably also in a desired orientation and/or alignment with respect to the apparatus 10, in particular such that the, or each, sensing axis of each sensing unit is aligned in a desired manner, or at least in a known manner. This may be achieved in any convenient manner, e.g. by providing alignment marking(s) and/or alignment device(s) on the sensor units and/or on the apparatus 10. In alternative embodiments, the sensor units may be permanently fixed to, or incorporated into, the apparatus to be monitored.

The monitoring system 50 comprises at least two sensor units 20. Each sensor unit 20 is mounted, in use, at a respective location on the apparatus 10. Preferably, each sensor unit 20 is spaced apart from the, or each, other sensor unit 20 along at least one of the main orthogonal axes of the apparatus 10 (i.e. the longitudinal axis that runs in a direction from the inlet 12 to the outlet 14 in this example, the transverse axis that runs perpendicular to the longitudinal axis in a side-to-side direction, and the vertical axis). In preferred embodiments, each sensor unit 20 is spaced apart from the, or each, other sensor unit 20 along at least one of the longitudinal and transverse axes. Each sensor unit 20 is preferably spaced apart from the geometric centre or centre of mass of the apparatus 10 since the effects of the vibrations tend to increase with distance from the geometric centre or centre of mass. **It** is preferred to locate each sensor unit 20 on the main body 13 of the apparatus 10 rather than, for example, on a peripheral component such as a feeder, conveyor or chute since peripheral components may be affected by the vibrations in a manner that is not representative of the vibration of the apparatus 10 itself.

In preferred embodiments, the monitoring system 50 comprises four sensor units 20A, 20B, 20C, 20D, although in alternative embodiments, the monitoring system 50 may comprise more than four or fewer than four sensor units. In use, the sensor units 20A-20D are spaced apart around the apparatus 10, preferably in a symmetric manner, e.g. with respect to the longitudinal and/or transverse axes of the apparatus 10. Preferably, sensor units 20A and 20B are located on one side of the apparatus 10 and sensor units 20C and 20D are located on the other side. Sensor units 20A and 20C are preferably located at or adjacent the inlet 12, or feed end, and sensor units 20B and 20D are preferably located at or adjacent the outlet 14, or discharge end. The sensor units 20A-20D may be located at the same or substantially the same vertical level. Typically, the main body 13 of the apparatus 10 is box-like in shape (in particular a generally square or rectangular box) and each sensor unit 20 is located at or adjacent a respective corner of the body 13. Conveniently, as illustrated in Figure 1, the sensor units 20A-20D are located at or adjacent a respective suspension location, i.e. the locations where respective suspension springs (not shown) are provided. More generally, the sensor units 20 are, in use, spaced apart with respect to each other on the apparatus 10. The sensor units 20 may be spaced apart from any one or more of the geometrical centre, centre of gravity and/or vibrational centre of the apparatus. The sensor units 20 are preferably symmetrically arranged with respect to one or more of the main axes of the apparatus 10.

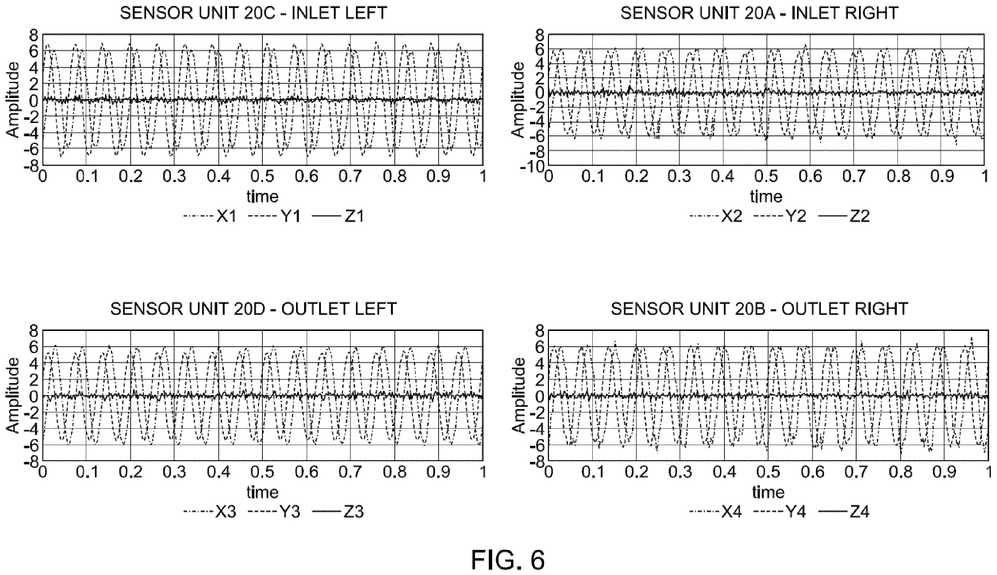

The monitoring system 50 comprises a system controller 22 configured to receive data indicative of or otherwise relating to the, or each, measurement taken by each sensor unit 20 during use. At least one of, and preferably all of, the sensor units 20 are capable of communicating with the controller 22, e.g. by a wired or wireless communication link. In preferred embodiments the sensor units 20 and controller 22 are configured to communicate with each other wirelessly (for example via WiFi (trade mark) or other wireless LAN communication, Bluetooth (trade mark) or other personal area network (PAN) wireless communication, Zigbee (trade mark) or other wireless sensor network communication), and to this end the controller 22 and sensor units 20 include corresponding conventional wireless communication means (represented in Figures 5 and 6 by WiFi modules 27) for supporting wireless communication. Each sensor unit 20 is capable of communicating with at least one other sensor unit 20, optionally with all other sensor unit(s) 20, as is required to effect the system's operation, e.g. via a wired or wireless communication link. The sensor units 12 are preferably configured to communicate with each other (as applicable) wirelessly (for example via WiFi (trade mark) or other wireless LAN communication, Bluetooth (trade mark) or other personal area network (PAN) wireless communication, Zigbee (trade mark) or other wireless sensor network communication), and to this end the sensor units 20 include corresponding conventional wireless communication means for supporting wireless communication.. Wi-Fi (or other wireless LAN communication) is preferred in embodiments where the system 50 is intended for using with screening apparatus and the like due to the size of the apparatus (and therefore the required communication range), the signal interference that the steel composition of the apparatus creates, and the data volume to be transmitted. It is preferred that the wireless communication links are direct links (as opposed to being via a separate router, gateway, access point or internet connection), e.g. comprising peer-to-peer wireless communication, or configuring one or more of the sensor units 20 and/or the controller 22 to provide a mobile hotspot or a wireless access point or to support tethering. In this regard, the sensor units 20 and/or the controller 22 may be configured to support any suitable conventional wireless protocols, including, but not limited to, WiFi, Bluetooth, Zigbee, NFC, RFID and so on.

The sensor units 20 may be configured to send measurement data to the controller 22 and/or receive control information from the controller 22 and/or each other as required. The controller 22 may comprise any suitably configured computing device, e.g. a tablet computer, a smartphone, a laptop computer, a PC or a dedicated computing device. The controller 22 typically includes a user interface (not illustrated) by which a user is able to operate the system 50, e.g. cause the sensor units 20 to take measurements and/or cause the sensor units 20 to send measurement data to the controller 22. The user interface is conveniently provided by a computer program (e.g. an App or other application software) running on the controller 22 for operating the system 50. The controller 22 typically includes a screen 23 or other visual display device, by which at least part of the user interface may be provided and/or by which measurements taken by the system 50 (and/or information derived therefrom) may be rendered to a user. The controller 22 and/or other computing device, as applicable, may be programmed and/or otherwise configured to perform analysis of the measurement data as required by the application, e.g. in order to assess operating performance and/or other condition(s) of interest relating to the apparatus 10. Typically, analysis of the measurement data is based on known or assumed characteristic(s) of each sensor unit 20, including any one or more of: the location of the sensor unit 20 with respect to the apparatus 10 or with respect to each other; the orientation of the sensor unit 20; and/or the alignment of the sensor unit 20 with respect to one or more reference axis and/or with respect to each other. In order to provide accurate analysis of the measurement data received from the sensor units 20, it is desirable that each sensor unit 20 is located in a desired location; oriented in a desired orientation; and/or aligned in a desired alignment with respect to one or more reference axis, and/or with respect to each other, as applicable for the analysis.

Each sensor unit 20 comprises at least one sensor 25, preferably at least one vibration sensor, and as such in preferred embodiments the sensor units may be referred to as vibration sensor units. The, or each, vibration sensor 25 may be of any conventional type, for example comprising one or more accelerometer, piezoelectric vibration sensor, MEMs vibration sensing device, velocity sensor, proximity probe, laser sensor or eddy current vibration sensor. The sensor unit 20 may be configured to sense vibrations along a single axis. Preferably, however, the sensor unit 20 is configured to sense one or more characteristic (in particular acceleration, velocity and/or amplitude or displacement) of vibrations along more than one axis, in particular more than one mutually perpendicular axis. It is particularly preferred that the sensor unit 20 is configured to sense one or more characteristic (in particular acceleration, velocity and/or amplitude or displacement) of vibrations along three mutually perpendicular axis (i.e. the X, Y and Z axes, or any 3 Cartesian reference axes), which is commonly referred to as tri-axial vibration sensing and such sensors are commonly referred to as tri-axial vibration sensors or tri-axial accelerometers. This may be achieved in any conventional manner, for example using a respective vibration sensor oriented to sense vibrations along a respective axis, or using a single vibration sensor that is capable of sensing vibrations along multiple axes.

When the sensor units 20 are mounted on the apparatus 10, it is desirable for the, or each, sensing axis of each sensor unit 20 to be aligned with respect to one or more reference axis (which may be an axis of the apparatus 10, e.g. the longitudinal, transverse and/or vertical axis of the apparatus 10, and/or global horizontal and/or vertical axes), or at least to be in a known disposition or alignment with respect to the relevant reference axis/axes. It is also desirable for the orientation of the sensor units 20, and therefore of the sensing axis, or axes, to be known with respect to the reference axis/axes or direction(s). It is desirable for the sensor units 20 to be in a known alignment and/or orientation with respect to each other. This may be derived from the known alignment and/or orientation, respectively, of the sensor units 20 with respect to the relevant reference axis or axes. For example, it may be desired to mount the sensor units 20 on the apparatus 10 such that the units 20 are all in the same orientation and/or so that the respective corresponding sensing axis, or axes, of each sensor unit 20 are parallel with each other.

In preferred embodiments each sensor unit 20 includes a receiver 30 for communicating with an external reference time source (not illustrated), e.g. an external reference clock such as the GPS clock, or an International Atomic Time (TAI) source, a UTC source or the Time from NPL (MSF) time reference. Conveniently, the receiver 30 comprises a GPS receiver or other satellite receiver, but may comprise any other suitable type of wireless (e.g. RF) receiver or transceiver for communicating with the relevant external reference time source. Each sensor unit 20 typically includes one or more memory unit 32 for storing measurement data. Each sensor unit 20 typically includes a power source (not shown), e.g. one or more battery (preferably rechargeable), for powering the sensor unit 20. Optionally, a communication port 34 (e.g. a USB port or other port for wired connection) is provided to allow communication with external device(s) (not shown), e.g. for programming and/or data acquisition, and/or for battery charging. Optionally, each senor unit 20 includes a status indicator 36, e.g. comprising one or more lamp or display. Each sensor unit 20 typically includes a unit controller 38, e.g. a microcontroller or other programmable controller, programmed or otherwise configured to control the operation of the unit 20.

Each sensor unit 20 typically comprises a housing 40 that contains the sensor(s) 25 and any other electrical or electronic component(s) and/or circuitry required by the sensor unit 20, e.g. to support operation of the sensor(s) 25, for data storage and/or communication with the controller 22 and/or with each other as required. The housing 40 may be referred to as the body of the sensor unit 20 and may take any suitable form, typically comprising a rigid enclosure or casing, and may be formed from any suitable material, e.g. plastics or metal. The housing 40 is typically box-like in shape (in particular a generally square or rectangular box).

The monitoring system 50 is operable such that each sensor unit 20 makes at least one, typically a plurality of, respective measurement simultaneously, or more particularly within the same sampling window. As such the system 50 can obtain simultaneous measurements in multiple different locations, which in turn allows operational modes of interest and/or other operational states of the apparatus 10 to be identified. Each sensor unit 20 is configured to take its respective corresponding measurement(s) within the same sampling window. Since the sampling window is typically small (e.g. 13ms or less in the example provided above), in order to achieve the required synchronisation precision each sensor unit 20 synchronizes with a common (i.e. the same), and typically external, clock or other reference time source prior to making the respective measurement. In preferred embodiments, each sensor unit 20 achieves this by using its receiver 30 to synchronize itself with an external clock, conveniently the GPS clock or an International Atomic Time (TAI) source, with the result that the sensor units 20 are synchronized with each other. The sensor units 20 may synchronize their own internal clock (not shown but typically part of, or accessible by, the respective unit controller 38) with the external clock or other external reference time source. In alternative embodiments, the sensor units 20 may be configured to synchronize with each other using any other conventional clock synchronization means, for example using clock-sampling mutual network synchronization (CS-MNS), Inter-range Instrumentation Group time codes, Network Time Protocol (NTP), Precision Time Protocol (PTP), or the Reference Broadcast Time Synchronization (RBS) algorithm, and to do so may be configured for connection to any suitable telecommunications network as required.

In preferred embodiments, the monitoring system 50 has four sensor units 20A-20D arranged around the screening apparatus 10, preferably symmetrically, and preferably such that there are two sensor units 20 at each side of the apparatus 10 and two sensor units 20 at each end of the apparatus. This arrangement allows the monitoring system 50 to measure the relevant characteristic(s) of the vibratory movement simultaneously at different locations that facilitate identification of the modes of interest (such as the modes illustrated in Figures 2 to 4), and is particularly suitable for vibratory screening apparatus 10. More sensor units 20 may be provided so that measurements can be taken simultaneously at more than four locations, which can improve the monitoring system's ability to identify and/or characterize modes of interest. More generally, in alternative embodiments (not illustrated) more or fewer sensor units 20 may be used, and their locations may differ from those described herein as suits the application.

In preferred embodiments, which preferably have at least four sensor units 20, the monitoring system 50 can determine from the respective simultaneous measurements phase relationships between the movement of the apparatus 10 at the respective sensor unit locations, and can use the measurements, including the phase relationships as applicable, to determine if the screening apparatus 10 is operating at or near a critical frequency and/or to identify the mode that the screening apparatus 10 is experiencing. For example, the mode illustrated in Figure 2 may be identified by a 180 degrees phase shift left to right at the feed end of the screening apparatus together with the inverse of this phase shift at the discharge end, predominantly measured in the vertical direction, while the mode illustrated in Figure 3 may be identified by in-phase motion in the left to right direction at the feed end that is 180 degrees out of phase with the same measurements at the discharge end of the screen, when measured in the lateral direction.

In addition to being preferred locations for identifying phase differences in the movement of the screening apparatus 10, the preferred four measurement locations as illustrated Figure 1 are also well suited for enabling the monitoring system 50 to monitor the orbit of the screening apparatus' movement and to detect signs of wear or damage in the screening apparatus' structure. The corners of the screening apparatus 10 typically have a confluence of components and vibration profiles available to be deciphered. For example, a broken spring may easily be detected by an abnormal and erratic vibration profile measured at the suspension corner. Other components of interest would include, screen media, tensioning assemblies, structural connections, and so on. In addition, the preferred locations are generally the most accessible points on a screen due to the structural nature of the support system below the suspension. Furthermore, the magnitude of primary unbalance is typically more prominent towards the extremities of the structure, furthest from mass centre/drive centre.

The synchronized measurement data retrieved from each of the sensor units 20A-20D may be used collectively to analyse the operation and/or condition of the apparatus 10. The analysis may be performed by the controller 22 and/or by any other computing device as desired, and may be performed in real time or at any other convenient time. The data and/or results of the analysis of the data may be displayed via a user interface, conveniently via screen 23. Because the measurement data from each sensor unit 20A-20D relates to the same, precise sampling window, the analysis is able to accurately detect and/or identify operational modes and/or other characteristics of the operation and/or condition of the apparatus 10, in particular mode(s), condition(s) or other characteristic(s) that can be detected or identified by one or more aspect of vibratory movement(s) of the apparatus 10.

In use, a typical operation of the system 50 may involve a user making, via a user interface on the App or other software running on the controller 22, a request for measurements to be taken, or for a particular analysis, e.g. orbital analysis, to be performed. In response to this activation request, the controller 22 communicates with each sensor unit 20, typically one at a time, providing a command to take the relevant measurement(s) at the determined measurement time. Each sensor unit 20 synchronises its internal clock in preparation for the measurement time. Once the measurement time arrives, all of the sensor units 20 obtain the relevant measurement data. When the measurements are complete, the controller 22 (e.g. via the App) connects to each sensor unit 20, typically one at a time, to obtain the respective measurement data from each sensor unit. The App, or other computer program(s), may amalgamate or otherwise analyse the respective measurement data to provide synchronous results from each of the sensor unit 20 locations. For the purpose of synchronisation, each instance of vibration measurement data may be associated with a respective time stamp relating to a common timeline, wherein the common timeline may be determined via the external reference time source.

It can be difficult to identify undesirable operating modes or other conditions from the raw measurement data generated by the sensor units 20 not least because the raw measurement data is at least partly indicative of vibratory movement that is intended, i.e. desired rather than being undesirable. Advantageously, therefore, the system 50 is configured to process the measurement data to identify undesirable operating modes or conditions. Advantageously, the system 50 is configured to render to a user data indicative of identified undesirable operating modes or conditions, and/or from which undesirable operating modes or conditions can readily be identified. The rendered information preferably comprises visual information, for example comprising any one or more of: at least one graph; at least one table; at least one image; at least one animation. The rendered information may comprise measured information derived from the raw measurement data, and target information against which the measured information can be compared (e.g. by visual inspection by the user) to identify one or more undesirable operating mode or condition. The rendered information may be displayed on the screen 23. The system 50 may be configured to generate one or more alarm, preferably a visual alarm and/or an audio alarm, in response to identification of an undesirable operating mode or condition from the processed measurement data. In particular, the system 50 may be configured to determine if the non-nominal vibration data corresponds to an undesirable operating condition, undesirable operating mode, or other undesirable vibrations by, for example comparing the non-nominal vibration data with one or more vibration threshold and/or by comparing respective non-nominal vibration data for different sensor units 20 with each other, e.g. to detect an undesirable operating mode as illustrated in Figures 2 to 4.

Referring now to Figures 6 to 9 in particular, preferred embodiments of the system 50 are described particularly in relation to processing raw measurement data and rendering information derived therefrom to a user (not shown). In these examples, the system 50 comprises four sensor units 20A-20D but it will be understood that in alternative embodiments there may be more or fewer sensor units 20 although it is preferred that sensor units 20 are provided in multiples of 2, i.e. 2, 4, 6 and so on. Also, in the following examples it is assumed that each sensor unit 20 provides a respective measurement output signal for each of three sensing axis, although in alternative embodiments each sensor unit 20 may provides a respective measurement output signal for each of two sensing axis, or for a single sensing axis.

The location and orientation of each sensor unit 20 is known, typically being established during set up of the system 20, and are preferably as described above with reference to Figure 1. In this example, it is assumed that the sensor units 20 are each aligned with a common, or universal, coordinate system, in particular the Cartesian XYZ coordinate system described above and illustrated in Figure 1, such that each sensing axis of each sensor is aligned with a respective Cartesian reference axis.

Figure 6 shows typical output signals from the sensor(s) of each sensor unit 20A-20D, one for each sensing axis, i.e. 3 output signals per sensor unit 20 in this example. Because each sensor unit 20 has its sensing axes aligned with a respective one of the XYZ reference axes, each output signal is representative of vibrations measured along the respective reference axis. For example, in Figure 6 the output signals for sensor unit 20C are denoted as X1, Y1, Z1 and correspond to measured vibrations along the X axis, Y axis and Z axis respectively. Similarly the output signals for sensor unit 20A are denoted as X2, Y2, Z2, the output signals for sensor unit 20A are denoted as X3, Y3, Z3, and the output signals for sensor unit 20A are denoted as X3, Y3, Z3. In embodiments where the sensing axes are not aligned with the XYZ reference axes, the output signals of the sensor units 20 (or measurement data derived therefrom) may be transformed to represent measured vibrations along a respective one of the XYZ reference axes. This may be achieved in any conventional manner, conveniently using the known orientation of the sensor units 20 and any suitable mathematical transform operation. In any event vibration measurement data is obtained from each sensor unit 20 with respect to the common, or universal, coordinate system. The vibration measurement data represents the vibratory movement of the apparatus 10 as measured by the sensor units.

In typical embodiments, the sensor(s) 25 of each sensor unit 20 comprises one or more accelerometer and so measures vibrations by measuring acceleration along the respective sensing axis. In Figure 6, the amplitude of each output signal is therefore assumed to represent the amplitude of the respective measured acceleration. Corresponding data for measured velocity and/or displacement may be obtained from the acceleration data if desired. Alternatively, depending on the sensor type, the sensor units 20 may measure vibrations by measuring velocity and/or displacement. In any event, the respective vibrations may be measured in terms of acceleration, velocity and/or displacement and the vibration measurement data may correspondingly comprise acceleration data, velocity data and/or displacement data.

In the example of Figure 6, it can be seen that the amplitude of the measured acceleration along the Z axis is relatively small. This is expected of screening apparatus wherein the Z axis corresponds to the transverse axis of the apparatus 10 since the vibratory motion imparted by the drive system 16 is along the X and Y axes and so significant vibrations tend not to be experienced along the Z axis. In the example described below, only the measurement data relating to the X and Y axes are processed since these axes correspond to the plane (i.e. the X-Y plane) in which the desired vibratory movement is imparted to the apparatus 10 via the drive system 16, and therefore the plane in respect of which it is difficult to distinguish undesirable (or non-nominal) vibrations from desired vibrations from the raw measurement data. Conversely, because the desired vibratory movement does not include movement along the Z axis, the raw measurement data from the sensors 20 relating to the Z axis may be used directly (i.e. without being processed in the manner described below) to identify undesirable operating modes or other conditions since the raw measurement data does not need to be processed to distinguish undesired vibrations from desired vibrations. More generally, in typical embodiments the processing described herein is advantageously performed in respect of the, or each, plane in which desired vibratory movement is imparted to the apparatus.

The system 50 is configured to sample the sensor output signals to obtain corresponding vibration measurement data for each sensor unit 20, i.e. for each sensing axis of interest for each sensor unit 20. In preferred embodiments, as described above the sampling is performed by the respective sensor unit 20 on the respective output signal(s) from the, or each, sensor 25 of the respective sensor unit 20. Alternatively, the sensor output signals may be transmitted to the controller 22 and sampled by the controller 22. As described above, the respective vibration measurement data for each sensor unit 20 are synchronised with each other. The system 50 therefore obtains, for the or each relevant sensing axis of each sensing unit 20, respective vibration measurement data that are synchronised with each other and with the vibration measurement data of the, or each, of the other sensing units 20. Moreover, as described above, the respective vibration measurement data represent measurements taken in respect of the common, or universal, coordinate system. Typically, the respective vibration measurement data comprises a plurality of measurement data values, which may be referred to as a dataset, taken over time (the respective data values being synchronised across the sensing units as described above). As such, the respective vibration measurement data is representative of the respective time-varying sensor output signal, as illustrated by way of example in Figure 6. The vibration measurement data may be referred to as raw measurement data.

In preferred embodiments, the respective vibration measurement data for each sensor unit 20 is provided to the controller 22 to be processed as described below.

Using the respective vibration measurement data for each sensor unit 20, the system 50, typically the controller 22, is configured to calculate, in respect of each relevant axis of the common coordinate system, average vibration data. The respective average vibration data for each axis is an average of the vibration measured along the respective axis by all of the sensor units 20, i.e. an overall average vibration. Typically, the average vibration data is calculated over time corresponding to the measurement over time of the vibration measurement data. Preferably, the average vibration data is synchronised with the vibration measurement data.

A preferred method of calculating the average vibration data is now described with reference to equations (1) to (4) below, the method preferably involving broadband root mean square averaging.

The preferred method involves calculating, from the respective vibration measurement data and for each sensor unit 20, a peak root mean square value, $x_{peak\,rms}$, of the respective sensor output signal for each relevant axis of the common coordinate system (e.g. each of the X, Y and Z axes, or optionally just two of the axes, e.g. X and Y, depending on the requirements of the application). This is illustrated in equation (1) in which $i$ is a vibration measurement data sample index, $x$ is the value of the respective vibration measurement data sample and $n$ is the number of samples of the measurement data used in the calculation.

$$x_{peak\,rms} = \sqrt{2} \cdot \sqrt{\frac{1}{n} \sum_{i=1}^{n} x_i^2} \qquad (1)$$

The preferred method involves calculating, from the respective vibration measurement data and for each sensor unit 20, a fundamental frequency and phase for each sensor output signal for each axis. In typical embodiments, this provides an indication of the operation speed and timing of the apparatus 10. The fundamental frequency may be calculated using equation (2) in which $freq_{x1}$ is the fundamental frequency of the respective sensor output signal, $N_{cycles}$ is the number of cycles of the sensor output signal and $t_2\text{-}t_1$ is the time period over which $N_{cycles}$ is counted.

$$freq_{x1} = \left( \frac{N_{cycles}}{t_2 - t_1} \right) \qquad (2)$$

The phase may be calculated using equation (3) in which $\varnothing_{x1}$ is the phase (in radian (rad) of the respective output signal, $f_{x1}$ is the fundamental frequency of the respective sensor output signal, and $t_1$ is a reference time with respect to which phase is measured.

$$\varnothing_{x1} = 2 \cdot \pi \cdot f_{x1} . t_1 \qquad (3)$$

For each for each relevant axis of the common coordinate system, a respective average value is calculated for the peak root mean square value, the fundamental frequency and the phase by averaging the respective peak root mean square, fundamental frequency and phase values obtained for the respective axis in respect of each sensor unit 20. The average values may be used to provide, for each axis (e.g. each of the X, Y and Z axes, or optionally just two of the axes, e.g. X and Y, depending on the requirements of the application), a respective representation of an average vibration signal. This may be achieved using equation (4) in which $X_{n\,ave}$ is the average vibration signal for axis $n$, $Xave_{peak\,rms}$ is the average root mean square value for axis $n$, $freq_n$ is the average fundamental frequency value for axis $n$, $\varnothing_{xn}$ is the average phase for axis $n$, and $t$ is time.

$$X_{n\,ave} = Xave_{peak\,rms} \cdot \sin(2 \cdot \pi \cdot freq_n \cdot t + \varnothing_{xn}) \qquad (4)$$

The average vibration data can be calculated in any suitable manner, not just the manner described above with reference to equations (1) to (4). For example, a spectral averaging approach may be taken in which, for each sensor unit 20, the respective vibration measurement data from the respective sensor output signal for each relevant axis of the common coordinate system is transformed from the time domain to the frequency domain. For each axis, the respective frequency domain data from each sensor unit 20 is averaged to produce average frequency domain data. The respective average frequency domain data may then be transformed to the time domain to provide data representing an average time vibration signal. The method described above with reference to equations (1) to (4) is preferred particularly in applications in which fundamental vibration is dominant enough to distinguish primary operational vibration amplitude and phase because it provides sufficient accuracy while requiring relatively low computational resources. The spectral averaging method has a higher computational demand and allows for more accurate averaging across an entire frequency range. In any event, in preferred embodiments, the system 50 is configured to calculate from the sensor output signal(s) of each sensor unit 20, average vibration data for each axis, the respective average vibration data representing the average vibration experienced by the apparatus 10 along the respective axis, typically over one or more measurement period. The average vibration data typically comprises data indicating an amplitude (e.g. peak rms value), frequency and phase of an average vibration signal that represents the average vibration experienced by the apparatus 10 along the respective axis. The average vibration data is advantageously synchronised with the vibration measurement data. In preferred embodiments this is conveniently achieved by calculating the average vibration data from the vibration measurement data. In particular, by averaging the vibration measurement data from each sensor unit to calculate average amplitude (rms peak), the respective sensor vibration signal phase is retained and may be used for comparing relative phase.

The average vibration data serves as nominal vibration data (i.e. data representing nominal vibration of the apparatus) with which the respective vibration measurement data of each sensor unit 20 can be compared in order to determine variations between the vibration measurement data and the respective nominal vibration data. In alternative embodiments, other nominal vibration data may be used, for example nominal vibration data may be obtained by simultaneously measuring vibrations at one or more location of the apparatus 10 that less susceptible to undesirable vibrations, e.g. at the bearing(s) by which the drive system is coupled to the screen or other vibratory component. Alternatively, nominal vibration data may be calculated mathematically using a suitable mathematical model of the apparatus and the desired vibratory movement. Alternatively, the nominal vibration data may comprise historical nominal vibration data for the apparatus obtained by calculation and/or empirically.

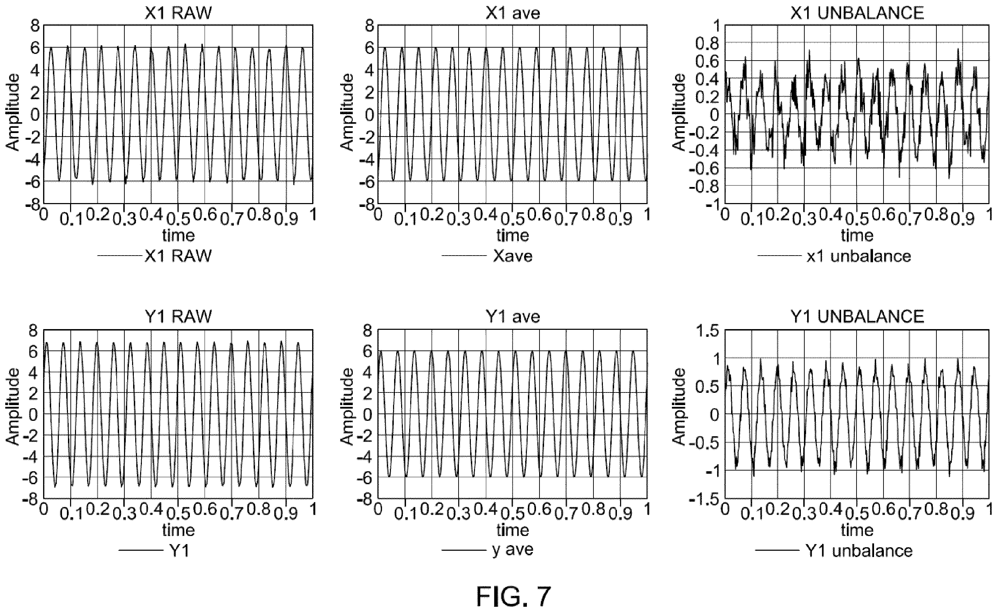

In preferred embodiments, for each sensor unit 20, the system 50, typically the controller 22, is configured to compare the vibration measurement data for each axis to the respective nominal vibration data for that axis and to produce non-nominal vibration data representing the difference between the vibration measurement data and the respective nominal vibration data. The non-nominal vibration data indicates how the vibrations along the respective axis at the respective sensor unit 20 differ from the respective nominal vibration data over time. As such, the non-nominal vibration data may be said to represent unbalanced vibrations at the respective sensor unit location. Figure 7 illustrates graphically how respective nominal vibration data may be subtracted from vibration measurement data to produce non-nominal, or unbalance, vibration data. In the example of Figure 7, the average vibration data, X1 ave, for the X axis of one of the sensor units 20 is subtracted from the raw vibration measurement data, X1 RAW, to produce the respective non-nominal vibration data, X1 UNBALANCE, which indicates how X1 RAW differs from X1 ave over time. Figure 7 also shows the average vibration data, Y1 ave, the raw vibration measurement data, Y1 RAW, and the corresponding non-nominal vibration data, Y1 UNBALANCE for the Y axis of the same sensor unit 20, Y1 UNBALANCE being obtained by subtracting Y1 ave from Y1 RAW. In the example of Figure 7 it is assumed that the vibrations of interest are along the X and Y axes, which is typical for screening apparatus where the forced vibratory movement is in the X-Y plane. In such cases, vibration along the Z axis may be deemed to be solely unbalanced vibration and so there is no need to calculate nominal vibration data with which to compare it. In other embodiments, however, non-nominal vibration data for the Z axis may be obtained in the same manner as for the X and Y axes. Non-nominal vibration data may be obtained for each of the sensor units 20 in the same manner.

In preferred embodiments therefore, the system 50 is configured to calculate for, the respective location of each sensor unit 20, unbalanced or non-nominal vibration data for each axis of interest, the respective non-nominal vibration data representing differences between the raw measured vibration data for the respective axis at the respective sensor location and nominal vibration data for the respective axis. The nominal vibration data is preferably average vibration data calculated by averaging the raw measured vibration data for the respective axis for all of the locations. Preferably, the non-nominal vibration data is calculated by subtracting the respective nominal vibration data from the respective raw vibration measurement data. In preferred embodiments, the non-nominal vibration data is calculated by subtracting the amplitude of the nominal vibration data (e.g. the average vibration data) from the amplitude of the corresponding raw vibration measurement data to produce a respective amplitude value for the non-nominal vibration data. Because the nominal vibration data and the vibration measurement data are synchronised, the frequency and phase of the non-nominal vibration data are the same as for the vibration measurement data. Non-nominal vibration data comprising data indicating the amplitude, frequency and phase of the non-nominal vibrations may therefore be obtained for each sensor unit location and in respect of each axis. The corresponding data may be the respective data for each measurement time and/or for each frequency. The unbalanced, or non-nominal vibration data, may comprise the difference in the respective nominal and measured amplitudes at the frequency and phase of the vibration measurement data.

As is the case for calculating the average vibration data, calculating the non-nominal, or unbalanced, vibration data may be performed in the time domain or in the frequency domain, and may for example involve subtracting the amplitude of the nominal vibration data from the amplitude of the raw measured vibration data at corresponding frequencies and/or in respect of corresponding times or data samples.

In preferred embodiments, the non-nominal vibration data provides the system 50 with data indicating the amplitude, direction and phase of the unbalanced, or non-nominal, vibrations along each axis at the location of each sensor unit.

**It** will be apparent from the foregoing that by calculating the non-nominal vibration data, the system 50 isolates or extracts data from the vibration measurement data that is indicative of non-nominal vibrations. By calculating the non-nominal vibration data for multiple locations, the system 50 facilitates identification of unbalances in the vibrations at the respective locations, which facilitates identification of undesirable operational modes and/or other undesirable conditions of the apparatus 10. In some embodiments, the system 50 is configured to identify, or detect, undesirable operation modes and/or undesirable conditions using the non-nominal vibration data, and optionally to render to the user (e.g. via screen 23) a visual representation or other visual indication of the undesirable operation mode(s) and/or undesirable condition(s), and/or to provide a visual and/or audio alarm in response to detection of the undesirable operation mode(s) and/or undesirable condition(s). In some embodiments, the system 50 is configured to render to the user (e.g. via screen 23) a visual representation or other visual indication of the operation of the apparatus 10, in particular of the oscillatory movement of the apparatus 10 and/or of the non-nominal vibration of the apparatus 10, using any one or more of: the vibration measurement data, the non-nominal vibration data and the nominal/average vibration data. Optionally, the system 50 is configured to include in the visual representation or other visual indication a visual indication of target, or nominal, movement, or vibration, of the apparatus 10. The visual indication of target, or nominal, movement/vibration may be generated using the nominal/average vibration data or may represent any other target value(s), and/or may be superimposed on (or otherwise presented in combination with) a visual representation or other visual indication of the movement (in particular the non-nominal or unbalanced vibration) of the apparatus 10 generated from the vibration measurement data and/or the non-nominal vibration data. Providing visual indication(s) representing target(s) allows the user to readily identify undesired or problematic vibrations.

In any visual representations provided by the system 50, vibration may be presented as acceleration, velocity or displacement as desired, and may be provided in any vibration metric, root mean square (rms), peak-peak, crest factor, power and so on.

In preferred embodiments, the system 50 is configured to provide, e.g. via screen 23 and/or any other visual display device associated with the system 50, one or more visualization of at least the non-nominal, or unbalanced, vibrations of the apparatus 10. The visualization may take any suitable forms, for example any one or more of:

- Tabulated data
- Alarm(s) indicating specified thresholds have been exceeded
- 2D amplitude time plots or orbits
- 2D planar representations, static or animated, illustrating vibration motion at sensor locations, e.g. as a function of apparatus distortion
- 3D reorientations, static or animated, of apparatus distortion
- Vibration amplitude distortion, optionally magnified according to the magnitude of unbalance relative to apparatus representation proportions to ensure vibration unbalance can be clearly represented.

For example, Figure 7 illustrates exemplary 2D amplitude time plots, X1 UNBALANCE and Y1 UNBALANCE, for unbalanced vibrations along the X axis and Y axis respectively, wherein the amplitude may be the amplitude of the acceleration, velocity or displacement of the vibrations. The plots of Figure 7 are provided in respect of a single sensor unit 20. Corresponding plots may be provided for the, or each, other sensor unit 20.

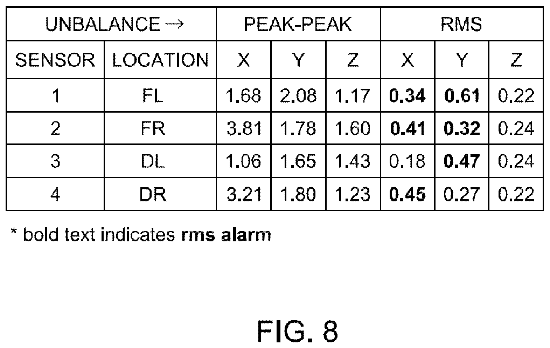

Figure 8 shows an exemplary table providing a visual indication of the unbalanced, or non-nominal, vibration data for four sensor units along the X, Y and Z axes, in which vibrations are presented as peak-to-peak and rms values. The visualization of Figure 8 includes alarms in the form of highlighted text (red text in this example) being used to present vibration values that are deemed to correspond to an undesirable condition or mode, e.g. where the respective vibration value exceeds a relevant target threshold value.

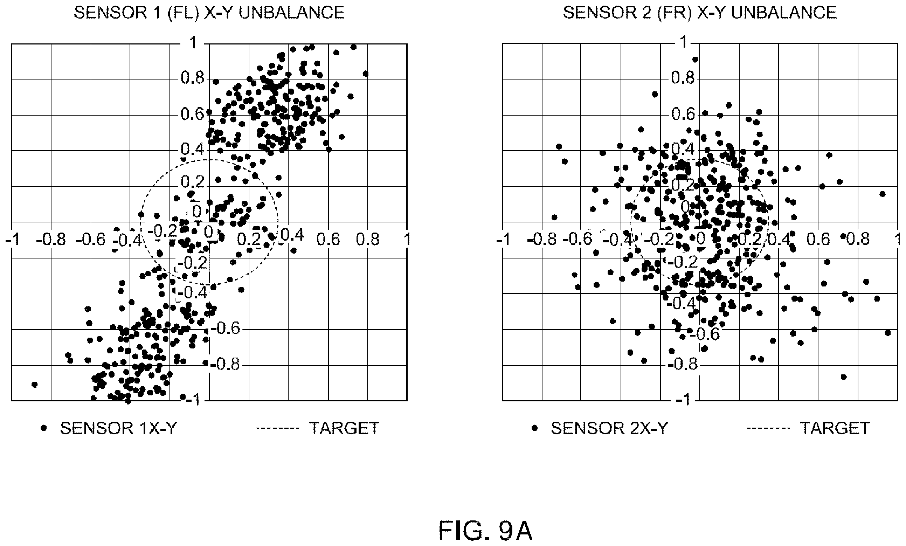

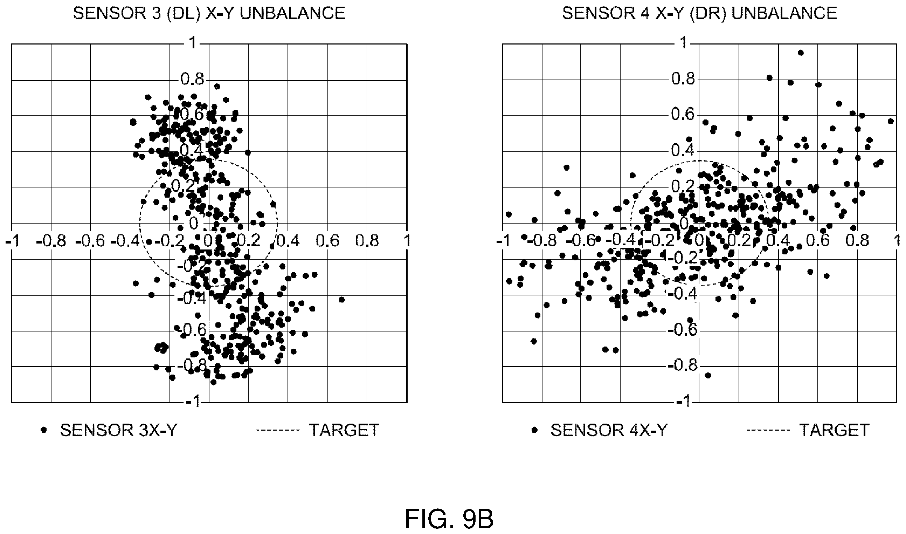

Figures 9A and 9B show, for four sensor units 20, exemplary 2D planar representations of the unbalanced, or non-nominal, vibration data in the X-Y plane. In each representation, a visual indication of a target (in the form of a circle in this example), or nominal, vibration level in the X-Y plane is provided together with the unbalanced vibration data. Providing visual indication(s) of target, or nominal, vibrations together with the unbalanced vibration data is advantageous in that it allows a user to readily identify the presence of vibrations that correspond to an undesirable condition or mode, i.e. by observing vibration data that does not fall within or otherwise satisfy the boundary/boundaries set by the target.

In preferred embodiments, the system 50 is configured to provide visualizations in the form of one or more animation, in particular one or more animation illustrating the unbalanced, or non-nominal, vibration along each relevant axis, and for each sensor unit 20. Animations are particularly effective for communicating time varying vibration amplitude and phase relationships. The system 50 may be configured to provide an animation comprising a representation of the apparatus 10 animated to move in a manner corresponding to the unbalanced, or non-nominal, vibration data, which may be achieved by causing a respective location of the representation corresponding to a respective sensor unit location to move in accordance with the respective unbalanced, or non-nominal, vibration data for the respective sensor unit 20. The animation(s) may be created and rendered in any conventional manner, conveniently using any conventional animation software, which may be supported by the system 50, typically by the controller 22. Advantageously, the animation(s) may illustrate undesirable operational modes (for example as shown in Figures 2 to 4) in manner that can readily be discerned by a user. Advantageously, this is in part achieved by the synchronisation of the vibration measurement data and the unbalanced, or non-nominal, vibration data.

Figure 2 to 4 may exemplify possible screen shots of such animations. However, it is not necessary that the representation of the apparatus 10 in the animation is an accurate representation of the apparatus 10. For example, the representation of the apparatus 10 may be any object (e.g. a cuboid in the case where the apparatus is a screening apparatus) with the same or similar proportions to the apparatus 10 itself. Optionally, the animation may be a wireframe animation in which the apparatus 10 is represented by a wireframe model, e.g. a wireframe cuboid. The wireframe animation, or other animation, may include a respective vertex at a respective location or the wireframe, or other form of representation, corresponding to the sensor unit locations. During animation, the vertices may be translated in the X, Y and Z axes in accordance with the respective non-nominal vibration data for the respective sensor unit location. As a result, the wireframe representation (or other representation as applicable) exhibits movement, or distortion, corresponding to the non-nominal vibration of the apparatus at the sensor locations. Advantageously, by animating the representation using only the non-nominal vibration data (as opposed to all of the vibration measurement data), movement corresponding to the non-nominal vibrations is readily observed, which allows undesirable operating modes or conditions to be readily identified by a user observing the animation. In particular, the animation enables the user to visualise relative isolated unbalanced apparatus (e.g. screen) motion in the absence of the dominant (purposeful) driven motion that would otherwise mask the unbalanced vibrations due to having such dissimilar magnitudes. The same principles used on a basic wireframe animation can be applied to an animation providing a more true to life representation (e.g. a 2D model, a 3D model or other image) of the screen, or other apparatus 10.

Absolute vibration magnitude values are not necessarily as important as relative variation in magnitude and phase between the sensor locations, i.e. how synchronous structure vibration is across the sensor locations. Optionally, an amplification factor can be applied to the unbalance vibration magnitudes to accentuate the visualisation of unbalanced vibrations for the user.

Optionally, unbalanced vibrations that exceed one or more pre-defined thresholds may be highlighted in the animation (or other visualization), for example using time varying colouration, or other alarm visual indication(s), on the animated representation of the apparatus 10.

In preferred embodiments, the respective calculated non-nominal, or unbalanced, vibration data for each sensor unit 20, which typically represent a respective amplitude, frequency and phase for each sensor unit location, and which are synchronised with each other, are together used to animate a representation of the apparatus 10, along the common timeline of the vibration measurements, to provide a visualisation of any out-of-balance vibration of the apparatus 10, e.g. in the screen structure. The animation may involve distorting the animated representation of the apparatus 10 at locations corresponding to the sensor unit locations according to the respective non-nominal, or unbalanced, vibration data (typically using a linear interpolation distortion between the locations). The animation may be scaled as required depending on the vibration frequency and amplitude to better amplify and visualise any out of phase or other unbalanced motions or vibrations the screen structure, or other apparatus, is exhibiting.

More generally, in preferred embodiments, the system 50 is configured to render to a user, one or more visualisation of the non-nominal vibration data for each sensor location, wherein the visualisation may comprise a visual representation of the data itself (e.g. as a plot or in another graphical form) and/or a visual representation (e.g. as image(s) or animation(s)) of the apparatus 10 being monitored that is distorted or otherwise modified using the non-nominal vibration data. By rendering visualisation(s) of the non-nominal vibration data on its own, or at least isolated from the nominal movement of the apparatus 10 (in particular vibratory movement that is purposefully imparted to the apparatus 10 by a drive system), the non-nominal vibration data and/or any undesirable condition(s) or mode(s) resulting from it can readily be discerned by the user.

The invention is not limited to the embodiment(s) described herein but can be amended or modified without departing from the scope of the present invention.

**Claims**

1. A vibration monitoring system comprising a plurality of sensor units, each sensor unit comprising at least one vibration sensor and being locatable on an apparatus to be monitored at a respective different location, wherein each sensor unit is operable to take vibration measurements using the respective at least one vibration sensor, the system being configured to obtain synchronized vibration measurement data for each sensor unit, and being configured to calculate a difference between the respective vibration measurement data for each sensor unit and nominal vibration data to obtain respective non-nominal vibration data for each sensor unit, and wherein the system is configured to render to a user at least one visualisation of the respective non-nominal vibration data for each sensor unit.

2. The system of claim 1, configured such that the respective vibration measurement data for each sensor unit comprises vibration measurement data in respect of two or three mutually perpendicular axes of a common coordinate system, and wherein the nominal vibration data comprises respective nominal vibration data for each of said two or three mutually perpendicular axes of the common coordinate system, and wherein said system is configured to obtain, for each sensor unit, respective non-nominal vibration data for each of said two or three mutually perpendicular axes of the common coordinate system by calculating a difference between the respective vibration measurement data for each of said two or three mutually perpendicular axes of the common coordinate system and the respective nominal vibration data for said two or three mutually perpendicular axes of the common coordinate system, and wherein, optionally, each sensor unit is configured to measure vibrations along two or three mutually perpendicular sensing axes, and wherein, preferably, each sensing axis is aligned with a respective one of the axes of the common coordinate system, or wherein the system is configured to transform vibration measurements taken in respect of each sensing axis to corresponding vibration measurement data in respective of a respective one of the axes of the common coordinate system.

3. The system of any preceding claim, wherein calculating said difference involves subtracting the nominal vibration data from the respective vibration measurement data, and wherein, preferably, the nominal vibration data comprises nominal amplitude data indicating the amplitude of nominal vibratory movement, and the vibration measurement data comprises measured amplitude data indicating the amplitude of measured vibratory movement, and wherein calculating said difference involves subtracting the nominal amplitude data from the measured amplitude data, preferably in respect of corresponding times and/or in respective of corresponding frequencies.

4. The system of any preceding claim, wherein said nominal vibration data comprises an average of the vibration measurement data for each sensor unit, and wherein, preferably, respective nominal vibration data for each of two or three mutually perpendicular axes of a common coordinate system is an average of respective vibration measurement data for each of said two or three mutually perpendicular axes of the common coordinate system.

5. The system of any preceding claim, wherein the respective vibration measurement data for each sensor unit is indicative of respective vibration measurements taken over time, the respective vibration measurement data for the sensor units being synchronised with each other, conveniently by synchronisation of the respective vibration measurements taken over time.

6. The system of any preceding claim, wherein the respective non-nominal vibration data is indicative of non-nominal vibrations detected by the respective sensor unit over time, the respective non-nominal vibration measurement data for the sensor units being synchronised with each other.

7. The system of any preceding claim, wherein the respective non-nominal vibration data is indicative of the amplitude, frequency and phase of non-nominal vibrations detected by the respective sensor unit.

8. The system of any preceding claim, wherein said at least one visualisation comprises a visual representation of the respective non-nominal vibration data for each sensor unit without visually representing other vibrations represented by said vibration measurement data, and/or wherein said at least one visualisation comprises a visual representation of non-nominal vibrations corresponding to the respective non-nominal vibration data for each sensor unit, and preferably does not include a visual representation of other vibrations represented by said vibration measurement data, and/or wherein said at least one visualisation comprises at least one graphical representation, or tabular representation, of the respective non-nominal vibration data for each sensor unit, for example comprising any one or more of: a table; an amplitude over time plot; an orbit plot; a planar plot with respect to first and second vibration axes, and/or wherein said at least one visualisation comprises at least one animation illustrating non-nominal vibration corresponding to the non-nominal vibration data, and/or wherein said at least one visualisation includes at least one vibration target or vibration threshold and/or is configured to highlight one or more part of said at least one visualisation that corresponds to undesirable vibrations.

9. The system of any preceding claim, wherein upon determining that said non-nominal vibration data corresponds to an undesirable condition and/or undesirable operating mode, or otherwise corresponds to undesirable vibrations, the system is configured to generate an alarm, for example an audio and/or visual alarm, and/or to highlight one or more part of said at least one visualisation that corresponds to the detected undesirable condition, undesirable operating mode, or other undesirable vibrations, and wherein the system may be configured to determine if said non-nominal vibration data corresponds to an undesirable condition, undesirable operating mode, or undesirable vibrations by, for example comparing the non-nominal vibration data with one or more vibration threshold and/or by comparing respective non-nominal vibration data for different sensor units with each other.

10. The system of any preceding claim, the system being configured to cause each sensor unit to take respective vibration measurements simultaneously to obtain synchronized vibration measurement data for each sensor unit, and wherein the sensor units are preferably configured to synchronize with each other before taking the respective measurement, and/or wherein, preferably, each sensor unit is configured to take the respective measurement within a sampling window, the sampling window being the same for each sensor unit and/or at the same sampling frequency.

11. The system of any preceding claim, wherein the sensor units are configured to synchronize with each other by synchronizing with an external reference time source, and wherein each sensor unit preferably includes means for communicating with the external reference time source, e.g. a GPS receiver, and wherein each sensor unit typically has an internal clock, and is configured to synchronize with the, or each, other sensor unit by synchronizing the internal clock with the external time reference source.

12. The system of any preceding claim, further including a controller, the controller being configured for communication, preferably wireless communication, with at least one of, and preferably all of, the sensor units, and wherein the controller is preferably separate from the sensor units, for example comprising a separate computing device, preferably a separate portable computing device, for example a smartphone, a tablet computer or a laptop computer, and wherein, preferably, the controller is configured for wireless communication with at least one of, and preferably all of, the sensor units via a direct wireless communication link, and may be configured to support any suitable wireless protocol(s), for example via WiFi (or other wireless LAN communication), Bluetooth (or other personal area network (PAN) wireless communication), Zigbee (or other wireless sensor network communication), and/or wherein each sensor unit is configured for wireless communication with at least one other sensor unit, preferably via a direct wireless communication link, and may be configured to support any suitable wireless protocol(s), for example via WiFi (or other wireless LAN communication), Bluetooth (or other personal area network (PAN) wireless communication), Zigbee (or other wireless sensor network communication).

13. The system of any preceding claim, wherein the system is configured to use the respective measurements from at least one of, preferably at least two of, and optionally all of, the sensor units to analyse the operation and/or condition of the apparatus being monitored, for example to determine if the apparatus is operating at or near to a designated critical frequency, and/or to identify an operational mode of the apparatus and/or an undesirable condition of the apparatus, and/or wherein the system is configured to use the respective simultaneously taken measurements from two or more of the sensor units to determine one or more phase relationship between movement of the apparatus at the respective sensor unit locations.

14. The system of any preceding claim installed on an apparatus to be monitored, wherein each sensor unit is removably mounted on the apparatus at a respective different location, and wherein, optionally, the apparatus is a screening apparatus or other vibratory apparatus, and wherein, preferably, the apparatus includes or is coupled to a drive system for imparting desired vibratory movement to the apparatus, and wherein said at least one visualisation comprises a visual representation of the respective non-nominal vibration data for each sensor unit without visually representing said desired vibratory movement, and/or wherein said at least one visualisation comprises a visual representation of non-nominal vibrations corresponding to the respective non-nominal vibration data for each sensor unit, and does not include a visual representation of said desired vibratory movement, and/or wherein said at least one visualisation comprises at least one animation illustrating non-nominal vibration of said apparatus corresponding to said non-nominal vibration data, and preferably not illustrating desired vibratory movement imparted to the apparatus by a drive system, and/or wherein said at least one visualisation comprises at least one animation comprising a representation of the apparatus animated to move in a manner corresponding to the non-nominal vibration data, for example by causing a respective location of the representation corresponding to a respective sensor unit location to move in accordance with the respective non-nominal vibration data for the respective sensor unit.

15. A monitoring method using a vibration monitoring system comprising a plurality of sensor units, each sensor unit comprising at least one vibration sensor and being operable to take measurements using the respective at least one vibration sensor, the method comprising:

locating each sensor unit at a respective different location on an apparatus to be monitored;

obtaining synchronized vibration measurement data for each sensor unit;

calculating a difference between the respective vibration measurement data for each sensor unit and nominal vibration data to obtain respective non-nominal vibration data for each sensor unit; and rendering to a user at least one visualisation of the respective non-nominal vibration data for each sensor unit.

EP 4 650 728 A1

FIG. 1

FIG. 2

FIG. 3

FIG. 4

EP 4 650 728 A1

FIG. 5

EP 4 650 728 A1

FIG. 6

FIG. 7

| UNBALANCE → | | PEAK-PEAK | | | RMS | | |
|---|---|---|---|---|---|---|---|
| SENSOR | LOCATION | X | Y | Z | X | Y | Z |
| 1 | FL | 1.68 | 2.08 | 1.17 | **0.34** | **0.61** | 0.22 |
| 2 | FR | 3.81 | 1.78 | 1.60 | **0.41** | **0.32** | 0.24 |
| 3 | DL | 1.06 | 1.65 | 1.43 | 0.18 | **0.47** | 0.24 |
| 4 | DR | 3.21 | 1.80 | 1.23 | **0.45** | 0.27 | 0.22 |

\* bold text indicates **rms alarm**

FIG. 8

EP 4 650 728 A1

SENSOR 1 (FL) X-Y UNBALANCE

SENSOR 2 (FR) X-Y UNBALANCE

• SENSOR 1X-Y ------- TARGET

• SENSOR 2X-Y ------- TARGET

FIG. 9A

FIG. 9B

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/240870 A1 (SCHAEFER JAN [DE] ET AL) 30 July 2020 (2020-07-30)<br>* claims 1, 5, 8, 14 *<br>* figures 1-3 *<br>* paragraph [0012] - paragraph [0013] *<br>* paragraph [0027] *<br>* paragraph [0030] - paragraph [0033] *<br>* paragraph [0040] - paragraph [0048] *<br>----- | 1-15 | INV.<br>G01H1/00<br>G01M7/02<br>G01M13/045 |
| X | US 2020/166922 A1 (CELLA CHARLES HOWARD [US] ET AL) 28 May 2020 (2020-05-28)<br>* figure 59 *<br>* paragraph [0335] - paragraph [0338] *<br>* paragraph [0602] *<br>* paragraph [0673] *<br>* paragraph [0693] *<br>* paragraph [0707] - paragraph [0715] *<br>* paragraph [0722] - paragraph [0724] *<br>* paragraph [0758] - paragraph [0763] *<br>* paragraph [0777] *<br>* paragraph [1134] - paragraph [1137] *<br>* paragraph [1207] *<br>* paragraph [1330] *<br>* paragraph [1361] *<br>----- | 1-15 | |
| X | CN 204 269 221 U (STATE GRID CORP CHINA; UNIV SOUTHEAST ET AL.) 15 April 2015 (2015-04-15)<br>* claim 1 *<br>* figure 2 *<br>* paragraph [0011] - paragraph [0012] *<br>----- | 1,3-6, 8-15 | |

TECHNICAL FIELDS SEARCHED (IPC)

G01H
G01M

-/--

The present search report has been drawn up for all claims

| Place of search | Date of completion of the search | Examiner |
|---|---|---|
| The Hague | 26 September 2025 | Lameloise, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

**Application Number**

**EP 25 17 4915**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 174 402 B2 (BOUSE KAI [US]; BOWERS III STEWART V [US] ET AL.) 8 May 2012 (2012-05-08) <br> * claim 1 * <br> * figures 2-4 * <br> * column 6, line 47 - line 50 * <br> * column 7, line 51 - line 65 * <br> * column 8, line 55 - line 64 * <br> ----- | 1,4-6, 8-10, 13-15 | |

TECHNICAL FIELDS
SEARCHED       (IPC)

The present search report has been drawn up for all claims

| Place of search | Date of completion of the search | Examiner |
|---|---|---|
| The Hague | 26 September 2025 | Lameloise, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 4915

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | | Publication date | Patent family member(s) | | Publication date |
|---|---|---|---|---|---|
| US 2020240870 | A1 | 30-07-2020 | AU | 2018348907 A1 | 12-03-2020 |
| | | | BR | 112020004376 A2 | 08-09-2020 |
| | | | CA | 3088427 A1 | 18-04-2019 |
| | | | CL | 2020000605 A1 | 14-08-2020 |
| | | | CN | 111247411 A | 05-06-2020 |
| | | | DE | 102017009373 B3 | 16-05-2019 |
| | | | RU | 2730716 C1 | 25-08-2020 |
| | | | US | 2020240870 A1 | 30-07-2020 |
| | | | WO | 2019072462 A1 | 18-04-2019 |
| | | | ZA | 202001136 B | 26-07-2023 |
| US 2020166922 | A1 | 28-05-2020 | US | 2020133254 A1 | 30-04-2020 |
| | | | US | 2020133255 A1 | 30-04-2020 |
| | | | US | 2020133256 A1 | 30-04-2020 |
| | | | US | 2020133257 A1 | 30-04-2020 |
| | | | US | 2020150643 A1 | 14-05-2020 |
| | | | US | 2020150644 A1 | 14-05-2020 |
| | | | US | 2020150645 A1 | 14-05-2020 |
| | | | US | 2020159206 A1 | 21-05-2020 |
| | | | US | 2020159207 A1 | 21-05-2020 |
| | | | US | 2020166922 A1 | 28-05-2020 |
| | | | US | 2020166923 A1 | 28-05-2020 |
| | | | US | 2020174463 A1 | 04-06-2020 |
| | | | US | 2020174464 A1 | 04-06-2020 |
| CN 204269221 | U | 15-04-2015 | NONE | | |
| US 8174402 | B2 | 08-05-2012 | US | 2006181427 A1 | 17-08-2006 |
| | | | US | 2008106424 A1 | 08-05-2008 |
| | | | WO | 2006079975 A2 | 03-08-2006 |

EPO FORM P0459

For more details about this annex : see Official Journal of the European Patent Office, No. 12/82